(19) Europäisches Patentamt / European Patent Office / Office européen des brevets

(11) **EP 4 289 658 A1**

(12) **EUROPEAN PATENT APPLICATION**

(43) Date of publication:
**13.12.2023 Bulletin 2023/50**

(21) Application number: **23155265.4**

(22) Date of filing: **07.02.2023**

(51) International Patent Classification (IPC):
**B60L 53/80** (2019.01)

(52) Cooperative Patent Classification (CPC):
**B60L 53/80; B60L 53/35;** Y02T 10/70;
Y02T 10/7072; Y02T 90/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.03.2022 CN 202210266580**

(71) Applicant: **Nio Technology (Anhui) Co., Ltd
Hefei City, Anhui 230601 (CN)**

(72) Inventors:
• **WANG, Yifei
Hefei City, Anhui, 230601 (CN)**
• **ZOU, Jiyong
Hefei City, Anhui, 230601 (CN)**

(74) Representative: **Vossius & Partner
Patentanwälte Rechtsanwälte mbB
Siebertstraße 3
81675 München (DE)**

(54) **METHOD AND COMPUTER SYSTEM FOR CONTROLLING VEHICLE BATTERY SWAPPING, MEDIUM, AND BATTERY SWAP STATION**

(57) The disclosure relates to a method for controlling vehicle battery swapping, a computer system for implementing the method, a computer storage medium, and a battery swap station. According to an aspect of the disclosure, the method for controlling vehicle battery swapping includes the following steps performed by the battery swap station: sending first indication information to a vehicle in response to determining that the vehicle is a target service vehicle, where the first indication information is used to request the vehicle to hand over a control permission to the battery swap station; enabling an auxiliary battery swapping operation in response to receiving second indication information from the vehicle, to guide the vehicle to a battery swap platform, where the second indication information is used to indicate that the control permission of the vehicle is handed over to the battery swap station; and handing over the control permission of the vehicle to the vehicle in response to the vehicle leaving the battery swap platform.

*FIG. 1*

## Description

### Technical Field

The disclosure relates to the field of electric vehicles, and more specifically, to a method for controlling vehicle battery swapping, a computer system for implementing the method, a computer storage medium, and a battery swap station.

### Background Art

At present, there are two main modes of energy supply for a battery electric vehicle: vehicle charging and battery replacement. In the vehicle charging mode, AC slow charging causes a long charging time and is limited by a parking place, while DC fast charging, though it shortens the charging time through a high power, has a great impact on a power grid and reduces the service life of the battery. In the battery replacement mode, the battery swap station can implement orderly charging by interacting with the power grid, and improve the comprehensive utilization efficiency of a power device, thereby quickly supplying energy to the electric vehicle, reducing waiting time of users, and not reducing the service life of the battery. Therefore, the battery replacement mode has high popularization value and economic significance in the urban public transportation field in China.

With the increasing intelligence and mechanization degree of the battery swap station, the battery swap station has basically implemented automation and intelligence in many scenarios. However, how to use these intelligent means to improve the service capability of the battery swap station, obtain a maximum throughput of the battery swap station, reduce the overall waiting time of users, and meet the usage habits and requirements of different users are problems to be solved urgently in the prior art.

### Summary of the Disclosure

In order to solve or at least alleviate one or more of the above problems, the following technical solutions are provided.

According to a first aspect of the disclosure, a method for controlling vehicle battery swapping is provided, including the following steps performed by a battery swap station: sending first indication information to a vehicle in response to determining that the vehicle is a target service vehicle, where the first indication information is used to request the vehicle to hand over a control permission to the battery swap station; enabling an auxiliary battery swapping operation in response to receiving second indication information from the vehicle, to guide the vehicle to a battery swap platform, where the second indication information is used to indicate that the control permission of the vehicle is handed over to the battery swap station; and handing over the control permission of the vehicle to the vehicle in response to the vehicle leaving the battery swap platform.

According to the method for controlling vehicle battery swapping in an embodiment of the disclosure, the method further includes: enabling an auxiliary parking operation in response to receiving third indication information from the vehicle, to guide the vehicle to the battery swap platform, where the third indication information is used to indicate that the control permission of the vehicle is not handed over to the battery swap station.

According to the method for controlling vehicle battery swapping in an embodiment or any one of the above embodiments of the disclosure, the auxiliary battery swapping operation includes one or more of the following: opening the door of the battery swap station, planning a parking path, monitoring the parking path, an operation of automatically parking the vehicle, detecting in-position parking of the vehicle, and monitoring a posture of the vehicle in the station.

According to the method for controlling vehicle battery swapping in an embodiment or any one of the above embodiments of the disclosure, in the process of enabling the auxiliary battery swapping operation to guide the vehicle to the battery swap platform, the method further includes: handing over the control permission of the vehicle to the vehicle in response to receiving fourth indication information from the vehicle, where the fourth indication information is used to request the battery swap station to hand over the control permission to the vehicle.

According to the method for controlling vehicle battery swapping in an embodiment or any one of the above embodiments of the disclosure, in the process of enabling the auxiliary battery swapping operation to guide the vehicle to the battery swap platform, the method further includes: handing over the control permission of the vehicle to the vehicle in response to determining that the vehicle is unable to be guided to the battery swap platform through an automatic parking operation.

According to the method for controlling vehicle battery swapping in an embodiment or any one of the above embodiments of the disclosure, the determining that the vehicle is a target service vehicle includes: receiving an authentication signal from the vehicle; determining, based on the authentication signal, whether the vehicle is a vehicle in a current service list; and in response to determining that the vehicle is a vehicle in the current service list, determining that the vehicle is a target service vehicle.

According to the method for controlling vehicle battery swapping in an embodiment or any one of the above embodiments of the disclosure, the method further includes: in response to determining that the vehicle is a target service vehicle, enabling a sensing device arranged in the battery swap station.

According to the method for controlling vehicle battery swapping in an embodiment or any one of the above embodiments of the disclosure, the method further includes: sending fifth indication information to the vehicle in response to determining that the vehicle arrives at the battery swap platform, where the fifth indication information is used to request the vehicle to hand over the control permission to the battery swap station; and enabling a battery swapping operation in response to receiving sixth indication information from the vehicle, where the sixth indication information is used to indicate that the control permission of the vehicle is handed over to the battery swap station.

According to the method for controlling vehicle battery swapping in an embodiment or any one of the above embodiments of the disclosure, the method further includes: receiving a vehicle battery swapping application verified by a cloud; determining whether the vehicle is a target service vehicle; and sending the first indication information to the vehicle in response to determining that the vehicle is a target service vehicle and determining that the vehicle enters a predetermined battery swap area.

According to a second aspect of the disclosure, a computer system for controlling vehicle battery swapping is provided, including: a memory; a processor; and a computer program stored on the memory and executable on the processor, where the execution of the computer program causes the following steps to be performed: sending first indication information to a vehicle in response to determining that the vehicle is a target service vehicle, where the first indication information is used to request the vehicle to hand over a control permission to the battery swap station; enabling an auxiliary battery swapping operation in response to receiving second indication information from the vehicle, to guide the vehicle to a battery swap platform, where the second indication information is used to indicate that the control permission of the vehicle is handed over to the battery swap station; and handing over the control permission of the vehicle to the vehicle in response to the vehicle leaving the battery swap platform.

According to the computer system for controlling vehicle battery swapping in an embodiment of the disclosure, the execution of the computer program further causes the following step to be performed: enabling an auxiliary parking operation in response to receiving third indication information from the vehicle, to guide the vehicle to the battery swap platform, where the third indication information is used to indicate that the control permission of the vehicle is not handed over to the battery swap station.

According to the computer system for controlling vehicle battery swapping in an embodiment or any one of the above embodiments of the disclosure, the auxiliary battery swapping operation includes one or more of the following: opening the door of the battery swap station, planning a parking path, monitoring the parking path, an operation of automatically parking the vehicle, detecting in-position parking of the vehicle, and monitoring a posture of the vehicle in the station.

According to the computer system for controlling vehicle battery swapping in an embodiment or any one of the above embodiments of the disclosure, in the process of enabling the auxiliary battery swapping operation to guide the vehicle to the battery swap platform, the execution of the computer program further causes the following step to be performed: handing over the control permission of the vehicle to the vehicle in response to receiving fourth indication information from the vehicle, where the fourth indication information is used to request the battery swap station to hand over the control permission to the vehicle.

According to the computer system for controlling vehicle battery swapping in an embodiment or any one of the above embodiments of the disclosure, in the process of enabling the auxiliary battery swapping operation to guide the vehicle to the battery swap platform, the execution of the computer program further causes the following step to be performed: handing over the control permission of the vehicle to the vehicle in response to determining that the vehicle is unable to be guided to the battery swap platform through an automatic parking operation.

According to the computer system for controlling vehicle battery swapping in an embodiment or any one of the above embodiments of the disclosure, the determining that the vehicle is a target service vehicle includes: receiving an authentication signal from the vehicle; determining, based on the authentication signal, whether the vehicle is a vehicle in a current service list; and in response to determining that the vehicle is a vehicle in the current service list, determining that the vehicle is a target service vehicle.

According to the computer system for controlling vehicle battery swapping in an embodiment or any one of the above embodiments of the disclosure, the execution of the computer program further causes the following step to be performed: in response to determining that the vehicle is a target service vehicle, enabling a sensing device arranged in the battery swap station.

According to the computer system for controlling vehicle battery swapping in an embodiment or any one of the above embodiments of the disclosure, the execution of the computer program further causes the following steps to be performed: sending fifth indication information to the vehicle in response to determining that the vehicle arrives at the battery swap platform, where the fifth indication information is used to request the vehicle to hand over the control permission to the battery swap station; and enabling a battery swapping operation in response to receiving sixth indication information from the vehicle, where the sixth indication information is used to indicate that the control permission of the vehicle is handed over to the battery swap station.

According to the computer system for controlling vehicle battery swapping in an embodiment or any one of the above embodiments of the disclosure, the execution of the computer program further causes the following steps to be performed: receiving a vehicle battery swapping application verified by a cloud; determining whether the vehicle is a target service vehicle; and sending the first indication information to the vehicle in response to determining that the vehicle is a target service vehicle and determining that the vehicle enters a predetermined battery swap area.

According to a third aspect of the disclosure, a computer storage medium is provided, including instructions, where when the instructions are run, the steps of the method for controlling vehicle battery swapping according to the first aspect of the disclosure are performed.

According to a fourth aspect of the disclosure, a battery swap station is provided, including the computer system for controlling vehicle battery swapping according to the second aspect of the disclosure.

According to the solution for controlling vehicle battery swapping in one or more embodiments of the disclosure, active management of a vehicle to be battery swapped can be implemented by establishing an interactive mechanism between the battery swap station and the vehicle, the usage habits and requirements of different users can be met based on the user's settings of and feedback on the vehicle, and the labor cost of the battery swap station is reduced while improving the battery swapping efficiency and user experience.

Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:

FIG. 1 is a flowchart of a method for controlling vehicle battery swapping according to one or more embodiments of the disclosure;
FIG. 2 is a flowchart of a method for controlling vehicle battery swapping according to one or more embodiments of the disclosure; and
FIG. 3 is a schematic block diagram of a computer system for controlling vehicle battery swapping according to one or more embodiments of the disclosure.

Detailed Description of Embodiments

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies may be practiced without these specific details. In other instances, well-known features are not detailed, to avoid complicating the descriptions unnecessarily.

The terms such as "include" and "comprise" are used to indicate that in addition to the units and steps that are directly and clearly described in this specification, other units and steps that are not directly or clearly described are not excluded in the technical solutions of the disclosure. The terms such as "first" and "second" are not used to indicate sequences of units in terms of time, space, size, etc., and are merely used to distinguish between the units.

The term "vehicle" or other similar terms in the specification are intended to indicate any suitable vehicle having a drive system including at least a battery, a power conversion device, and a drive motor, for example, a hybrid vehicle, an electric vehicle, a plug-in hybrid electric vehicle, and the like. The hybrid vehicle is a vehicle with two or more power sources, such as a vehicle powered by a gasoline engine and an electric motor. The term "battery swap station" in the specification refers to a place where a battery replacement service is provided for vehicles, and electric energy is supplied to the vehicles in the place through battery replacement operations.

Various exemplary embodiments according to the disclosure will be described below in detail with reference to the accompanying drawings.

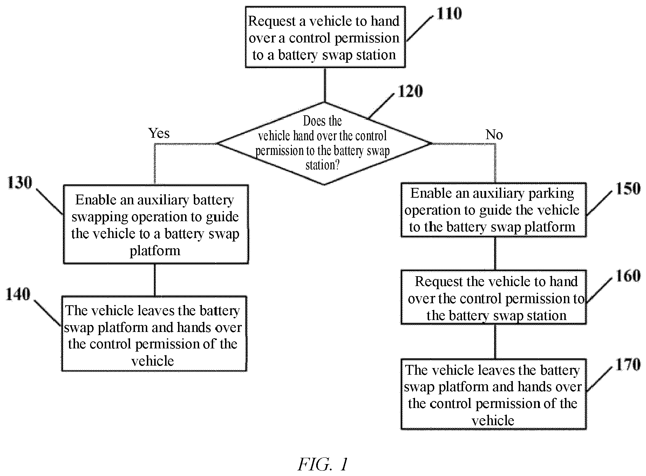

FIG. 1 is a flowchart of a method for controlling vehicle battery swapping according to one or more embodiments of the disclosure. As shown in FIG. 1, the method for controlling vehicle battery swapping according to one or more embodiments of the disclosure may include steps 110 to 170 performed by the battery swap station. In step 110, first indication information is sent to a vehicle in response to determining that the vehicle is a target service vehicle, where the first indication information is used to request the vehicle to hand over a control permission to the battery swap station. Exemplarily, a communication link may be established with the target service vehicle in manners such as WiFi, Bluetooth, LAN, 3G/4G/5G, or UWB, so as to request, by means of a central control screen of the vehicle, a phone, or an SMS message, the vehicle to hand over the control permission to the battery swap station.

Optionally, in step 110, a vehicle battery swapping application verified by a cloud may be received, and when it is determined that the vehicle is a target service vehicle and the vehicle enters a predetermined battery swap area, the vehicle is requested to hand over the control permission to the battery swap station.

Exemplarily, the predetermined battery swap area may be a rectangular area (for example, it is five meters long and three meters wide) in front of the door of the battery swap station. Optionally, the shape and size of the predetermined battery swap area may be adjusted according to actual application scenarios and requirements. Optionally, one or more image collection devices (for example, cameras) arranged in the battery swap station may also be used to collect a vehicle image and a convolutional neural network is used to process the collected vehicle image, to determine, based on a processing result of the convolutional neural network, whether the vehicle is in the predetermined battery swap area. Exemplarily, the convolutional neural network may be defined as $\mathcal{N}$, the collected vehicle image is $I$, the vehicle image collected by using a first image collection device is $I_1$, and the vehicle image collected by using a second image collection device is $I_2$. If an inference result is defined as $\eta$, and a threshold used by the convolutional neural network is $\Delta$, the processing result of the convolutional neural network $\mathcal{N}$ may be defined as:

$$\mathcal{N}(I_1, I_2) = \eta; \quad \mathcal{N}(I_1, I_2) = \begin{cases} 1; \eta > \Delta \\ 0; \eta < \Delta \end{cases}$$

where $\mathcal{N}(I_1, I_2) = 1$ indicates that the vehicle is in the predetermined battery swap area, and $\mathcal{N}(I_1, I_2) = 0$ indicates that the vehicle is not in the predetermined battery swap area. One or more image collection devices arranged in the battery swap station are used to determine whether the vehicle is in the predetermined battery swap area, which can further improve the determining accuracy and reliability.

Optionally, whether the vehicle is a target service vehicle may be determined in the following manners: receiving an authentication signal from the vehicle and determining, based on the authentication signal, whether the vehicle is a vehicle in a current service list; and in response to determining that the vehicle is a vehicle in the current service list, determining that the vehicle is a target service vehicle. Exemplarily, verification information encrypted by SHA256 may be used to verify whether the vehicle is a vehicle in the current service list. When it is determined that the vehicle is not a target service vehicle, the vehicle is instructed to leave the predetermined battery swap area. Exemplarily, an auxiliary driving function of the vehicle may be used to instruct the vehicle to leave the predetermined battery swap area or instruct a user to drive off the predetermined battery swap area.

In step 120, whether the vehicle agrees to hand over the control permission to the battery swap station is determined. Optionally, whether the vehicle agrees to hand over the control permission to the battery swap station may be determined by receiving the indication information from the vehicle. When it is determined that the vehicle agrees to hand over the control permission to the battery swap station, step 130 is performed.

In step 130, an auxiliary battery swapping operation is enabled to guide the vehicle to a battery swap platform. Optionally, the auxiliary battery swapping operation includes but is not limited to: opening the door of the battery swap station, planning a parking path, monitoring the parking path, detecting in-position parking of the vehicle, and monitoring a posture of the vehicle in the station. Correspondingly, when it is determined that the vehicle agrees to hand over the control permission to the battery swap station, the vehicle may be instructed to enable an automatic parking mode thereon. Therefore, the operation of confirming battery swapping by a user is avoided. Optionally, in the process where the automatic parking is enabled on the vehicle to drive the vehicle to the battery swap platform of the battery swap station, the auxiliary battery swapping operation is enabled to accurately guide the vehicle to the battery swap platform. Optionally, after the vehicle is guided to the battery swap platform through the auxiliary battery swapping operation and the vehicle is detected to be in position, a battery swapping operation may be automatically enabled. Optionally, when it is determined that the vehicle agrees to hand over the control permission to the battery swap station, location information of the vehicle may be determined by using a plurality of ultra-bandwidth devices, and the vehicle may be further accurately guided to the battery swap platform by enabling various sensor devices (for example, sensor devices for positioning and tracking) arranged in the battery swap station.

When it is determined that the vehicle agrees to hand over the control permission to the battery swap station, the operation resource consumption of the battery swap station may be significantly reduced and the safety performance and management efficiency of the battery swap station may be improved by automatically enabling the auxiliary battery swapping operation, and various sensor devices arranged in the battery swap station and other auxiliary functions of the battery swap station.

In step 140, the control permission of the vehicle is handed over to the vehicle in response to determining that the vehicle leaves the battery swap platform.

Optionally, in step 140, one or more image collection devices (for example, cameras) arranged in the battery swap station may be used to collect an image of the battery swap platform, the collected image of the battery swap platform is processed based on an image algorithm (for example, a machine learning algorithm, or a combination of deep learning and traditional machine learning), and whether the currently served vehicle is on the battery swap platform is determined based on a processing result of the image algorithm.

In step 120, when it is determined that the vehicle does not agree to hand over the control permission to the battery swap station, step 150 is performed.

In step 150, an auxiliary parking operation is enabled to guide the vehicle to the battery swap platform. In this case, the control permission of the vehicle is not handed over to the battery swap station, but is still at the vehicle end. Therefore, the battery swap station enables the auxiliary parking operation (for example, opening the door of the battery swap station or planning a parking path) to guide the user of the vehicle to park the vehicle on the battery swap platform.

In step 160, fifth indication information is sent to the vehicle in response to determining that the vehicle arrives at the battery swap platform (for example, by means of the image algorithm in step 140), where the fifth indication information is used to request the vehicle to hand over the control permission to the battery swap station; and a battery swapping operation is enabled in response to receiving sixth indication information from the vehicle, where the sixth indication information is used to indicate that the vehicle agrees to hand over the control permission of the vehicle to the battery swap station.

In step 170, the control permission of the vehicle is handed over to the vehicle in response to determining that the vehicle leaves the battery swap platform. Similarly, the method described in step 140 may be used to determine that the vehicle leaves the battery swap platform.

It should be noted that, because the battery replacement operation is mainly implemented by a mechanical device in the battery swap station, it is necessary to ensure that the control permission of the vehicle is handed over to the battery swap station during the battery swapping operation, so as to ensure the safety of the battery swapping operation. In addition, without departing from the spirit and scope of the disclosure, various interactive modes and verification modes (for example, using various existing interactive modes and verification modes of the battery swap station) may be used to perform the above process of requesting to hand over the control permission of the vehicle.

According to the method for controlling vehicle battery swapping proposed in one or more embodiments of the disclosure, active management of a vehicle to be battery swapped can be implemented by establishing an interactive mechanism between the battery swap station and the vehicle, the usage habits and requirements of different users can be met based on the user's settings of and feedback on the vehicle, and the labor cost of the battery swap station is reduced while improving the battery swapping efficiency and user experience.

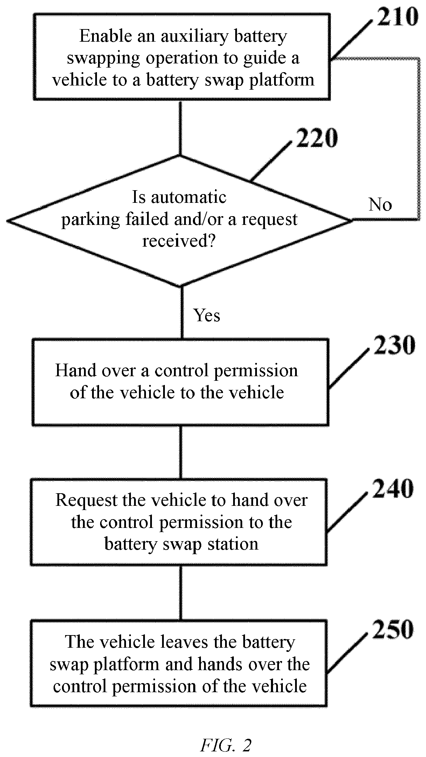

FIG. 2 is a flowchart of a method for controlling vehicle battery swapping according to one or more embodiments of the disclosure. As shown in FIG. 2, the method for controlling vehicle battery swapping according to one or more embodiments of the disclosure may include steps 210 to 250 performed by the battery swap station.

In step 210, an auxiliary battery swapping operation is enabled to guide a vehicle to a battery swap platform, and in this case, a control permission of the vehicle is handed over to the battery swap station. Optionally, the auxiliary battery swapping operation includes but is not limited to: opening the door of the battery swap station, planning a parking path, monitoring the parking path, detecting in-position parking of the vehicle, and monitoring a posture of the vehicle in the station. Correspondingly, when it is determined that the vehicle agrees to hand over the control permission to the battery swap station, the vehicle may be instructed to enable an automatic parking mode thereon. Therefore, the operation of confirming battery swapping by a user is avoided. Optionally, in the process where the automatic parking is enabled on the vehicle to drive the vehicle to the battery swap platform of the battery swap station, the auxiliary battery swapping operation is enabled to accurately guide the vehicle to the battery swap platform. Optionally, after the vehicle is guided to the battery swap platform through the auxiliary battery swapping operation and the vehicle is detected to be in position, a battery swapping operation may be automatically enabled. Optionally, when it is determined that the vehicle agrees to hand over the control permission to the battery swap station, location information of the vehicle may be determined by using a plurality of ultra-bandwidth devices, and the vehicle may be further accurately guided to the battery swap platform by enabling various sensor devices (for example, sensor devices for positioning and tracking) arranged in the battery swap station.

In step 220, whether the vehicle is able to be guided to the battery swap platform through an automatic parking operation and whether fourth indication information is received from the vehicle are determined in the process of enabling the auxiliary battery swapping operation to guide the vehicle to the battery swap platform, where the fourth indication information is used to request the battery swap station to hand over the control permission to the vehicle. When it is determined that the vehicle is unable to be guided to the battery swap platform through the automatic parking operation and/or the fourth indication information is received from the vehicle, step 230 is performed.

In step 230, the control permission of the vehicle is handed over to the vehicle. Optionally, when it is determined that the vehicle is unable to be guided to the battery swap platform through the automatic parking operation, the battery swap station hands over the control permission of the vehicle to the vehicle and enables an auxiliary parking operation to guide the vehicle to the battery swap platform. In this case, the control permission of the vehicle is handed over to the vehicle end. Therefore, the battery swap station enables the auxiliary parking operation (for example, opening the door of the battery swap station or planning a parking path) to guide the user of the vehicle to park the vehicle on the battery swap platform. Optionally, when the fourth indication information for requesting the battery swap station to hand over the control permission to the vehicle is received, the battery swap station hands over the control permission of the vehicle to the vehicle after the automatic parking operation is completed (for example, the vehicle is parked in position or fails to be parked in position).

In step 240, fifth indication information is sent to the vehicle in response to determining that the vehicle arrives at the battery swap platform (for example, by means of the image algorithm in step 140), where the fifth indication information is used to request the vehicle to hand over the control permission to the battery swap station; and a battery swapping operation is enabled in response to receiving sixth indication information from the vehicle, where the sixth indication information is used to indicate that the vehicle agrees to hand over the control permission of the vehicle to the battery swap station.

In step 250, the control permission of the vehicle is handed over to the vehicle in response to determining that the vehicle leaves the battery swap platform. Similarly, the method described in step 140 may be used to determine that the vehicle leaves the battery swap platform.

According to the method for controlling vehicle battery swapping proposed in one or more embodiments of the disclosure, the usage habits and requirements of different users can be taken into account while supporting full self-service battery swapping, thereby ensuring the control permission of the vehicle in battery swapping service links excluding the battery swapping operation, and improving the service capability and safety performance of the battery swap station while improving the user experience.

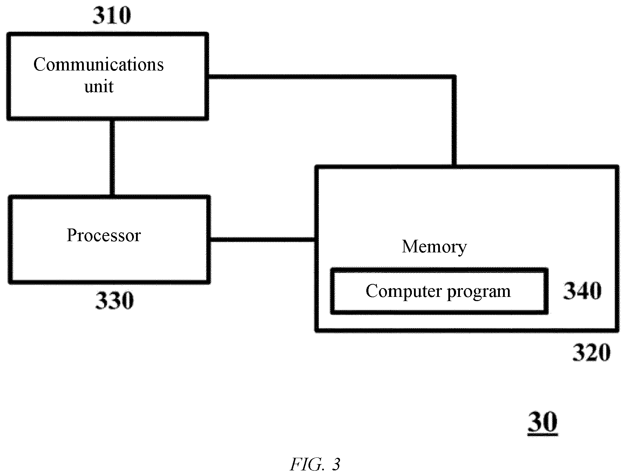

FIG. 3 is a schematic block diagram of a computer system for controlling vehicle battery swapping according to one or more embodiments of the disclosure.

As shown in FIG. 3, the computer system 30 for controlling vehicle battery swapping includes a communications unit 310, a memory 320 (for example, a non-volatile memory such as a flash memory, a ROM, a hard disk drive, a magnetic disk, an optical disc, and the like), a processor 330, and a computer program 340 stored on the memory 320 and executable on the processor 330.

The communications unit 310, as a communications interface, is configured to establish a communication connection between the computer system 30 and an external device or network (for example, a cloud, a vehicle, or the like).

The memory 320 stores the computer program 340 executable by the processor 330. The processor 330 is configured to execute the computer program 340 to implement the method for controlling vehicle battery swapping according to one or more embodiments of the disclosure.

In addition, the disclosure may alternatively be implemented as a computer storage medium, which has stored therein a program for causing a computer to perform the method for controlling vehicle battery swapping according to an aspect of the disclosure.

Here, various forms of computer storage media, such as disks (for example, a magnetic disk, an optical disc, etc.), cards (for example, a memory card, an optical card, etc.), semiconductor memories (for example, a ROM, a non-volatile memory, etc.), and tapes (for example, a magnetic tape, a cassette tape, etc.) may be used as the computer storage medium.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components may be implemented as hardware components, and vice versa.

Software (such as program code and/or data) in the disclosure may be stored on one or more computer storage media. It is also contemplated that the software identified herein may be implemented using one or more general-purpose or special-purpose computers and/or computer systems, networked and/or otherwise. The steps described herein may be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

**Claims**

1. A method for controlling vehicle battery swapping, comprising the following steps performed by a battery swap station:

   sending first indication information to a vehicle in response to determining that the vehicle is a target service vehicle, wherein the first indication information is used to request the vehicle to hand over a control permission to the battery swap station;
   enabling an auxiliary battery swapping operation in response to receiving second indication information from the vehicle, to guide the vehicle to a battery swap platform, wherein the second indication information is used to indicate that the control permission of the vehicle is handed over to the battery swap station; and
   handing over the control permission of the vehicle to the vehicle in response to the vehicle leaving the battery swap platform.

2. The method according to claim 1, further comprising:
   enabling an auxiliary parking operation in response to receiving third indication information from the vehicle, to guide the vehicle to the battery swap platform, wherein the third indication information is used to indicate that the control permission of the vehicle is not handed over to the battery swap station.

3. The method according to claim 1 or 2, wherein the auxiliary battery swapping operation comprises one or more of the following: opening the door of the battery swap station, planning a parking path, monitoring the parking path, an operation of automatically parking the vehicle, detecting in-position parking of the vehicle, and monitoring a posture of the vehicle in the station.

4. The method according to to any one of claims 1 to 3, wherein in the process of enabling the auxiliary battery swapping operation to guide the vehicle to the battery swap platform, the method further comprises:
   handing over the control permission of the vehicle to the vehicle in response to receiving fourth indication information from the vehicle, wherein the fourth indication information is used to request the battery swap station to hand over the control permission to the vehicle.

5. The method according to to any one of claims 1 to 4, wherein in the process of enabling the auxiliary battery swapping operation to guide the vehicle to the battery swap platform, the method further comprises:
   handing over the control permission of the vehicle to the vehicle in response to determining that the vehicle is unable to be guided to the battery swap platform through an automatic parking operation.

6. The method according to to any one of claims 1 to 5, wherein the determining that the vehicle is a target service vehicle comprises:

   receiving an authentication signal from the vehicle;
   determining, based on the authentication signal, whether the vehicle is a vehicle in a current service list; and
   in response to determining that the vehicle is a vehicle in the current service list, determining that the vehicle is a target service vehicle.

7. The method according to to any one of claims 1 to 6, further comprising:
   in response to determining that the vehicle is a target service vehicle, enabling a sensing device arranged in the battery swap station.

8. The method according to any one of claim 2, 4 and 5, further comprising:

   sending fifth indication information to the vehicle in response to determining that the vehicle arrives at the battery swap platform, wherein the fifth indication information is used to request the vehicle to hand over the control permission to the battery swap station; and
   enabling a battery swapping operation in response to receiving sixth indication information from the vehicle, wherein the sixth indication information is used to indicate that the control permission of the vehicle is handed over to the battery swap station.

9. The method according to to any one of claims 1 to 8, further comprising:

   receiving a vehicle battery swapping application verified by a cloud;
   determining whether the vehicle is a target service vehicle; and
   sending the first indication information to the vehicle in response to determining that the vehicle is a target service vehicle and determining that the vehicle enters a predetermined battery swap area.

10. A computer system for controlling vehicle battery swapping, comprising:

    a memory;
    a processor; and
    a computer program stored on the memory and executable on the processor, wherein the execution of the computer program causes the following steps to be performed:

       sending first indication information to a vehicle in response to determining that the vehicle is a target service vehicle, wherein the first indication information is used to request the vehicle to hand over a control permission to the battery swap station;
       enabling an auxiliary battery swapping operation in response to receiving second indication information from the vehicle, to guide the vehicle to a battery swap platform, wherein the second indication information is used to indicate that the control permission of the vehicle is handed over to the battery swap station; and
       handing over the control permission of the vehicle to the vehicle in response to the vehicle leaving the battery swap platform.

11. The system according to claim 10, wherein the execution of the computer program further causes the following step to be performed:
    enabling an auxiliary parking operation in response to receiving third indication information from the vehicle, to guide the vehicle to the battery swap platform, wherein the third indication information is used to indicate that the control permission of the vehicle is not handed over to the battery swap station.

12. The system according to claim 10 or 11, wherein the auxiliary battery swapping operation comprises one or more of the following: opening the door of the battery swap station, planning a parking path, monitoring the parking path, an operation of automatically parking the vehicle, detecting in-position parking of the vehicle, and monitoring a posture of the vehicle in the station.

13. The system according to to any one of claims 10 to 12, wherein in the process of enabling the auxiliary battery swapping operation to guide the vehicle to the battery swap platform, the execution of the computer program further causes the following step to be performed:
    handing over the control permission of the vehicle to the vehicle in response to receiving fourth indication information from the vehicle, wherein the fourth indication information is used to request the battery swap station to hand over the control permission to the vehicle.

14. The system according to to any one of claims 10 to 13, wherein in the process of enabling the auxiliary battery swapping operation to guide the vehicle to the battery swap platform, the execution of the computer program further causes the following step to be performed:
    handing over the control permission of the vehicle to the vehicle in response to determining that the vehicle is unable to be guided to the battery swap platform through an automatic parking operation.

15. The system according to to any one of claims 10 to 14, wherein the determining that the vehicle is a target service vehicle comprises:

    receiving an authentication signal from the vehicle;
    determining, based on the authentication signal, whether the vehicle is a vehicle in a current service list; and
    in response to determining that the vehicle is a vehicle in the current service list, determining that the vehicle is a target service vehicle.

Request a vehicle to hand over a control permission to a battery swap station — 110

Does the vehicle hand over the control permission to the battery swap station? — 120

Yes

No

130 — Enable an auxiliary battery swapping operation to guide the vehicle to a battery swap platform

140 — The vehicle leaves the battery swap platform and hands over the control permission of the vehicle

Enable an auxiliary parking operation to guide the vehicle to the battery swap platform — 150

Request the vehicle to hand over the control permission to the battery swap station — 160

The vehicle leaves the battery swap platform and hands over the control permission of the vehicle — 170

*FIG. 1*

Enable an auxiliary battery
swapping operation to guide a
vehicle to a battery swap platform
210

Is automatic
parking failed and/or a request
received?
220

No

Yes

Hand over a control permission
of the vehicle to the vehicle
230

Request the vehicle to hand over
the control permission to the
battery swap station
240

The vehicle leaves the battery
swap platform and hands over the
control permission of the vehicle
250

FIG. 2

**310**

Communications
unit

Processor

**330**

Memory

Computer program

**340**

**320**

**30**

*FIG. 3*

Europäisches
Patentamt

European
Patent Office

Office européen
des brevets

# EUROPEAN SEARCH REPORT

Application Number

**EP 23 15 5265**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 525 153 A (BEIJING ELECTRIC VEHICLE CO LTD) 22 October 2021 (2021-10-22) | 1-4, 6-13,15 | INV. B60L53/80 |
| Y | * paragraph [0042] – paragraph [0112]; figures 1-6 * | 5,14 | |
| | ----- | | |
| Y | EP 3 725 604 A1 (NIO NEXTEV LTD [CN]) 21 October 2020 (2020-10-21) | 5,14 | |
| A | * paragraph [0030] – paragraph [0094]; figures 1-3 * | 1-4, 6-13,15 | |
| | ----- | | |

|  |
|---|
| TECHNICAL FIELDS SEARCHED (IPC) |
| B60L |

The present search report has been drawn up for all claims

| Place of search | Date of completion of the search | Examiner |
|---|---|---|
| The Hague | 2 November 2023 | Altuntas, Mehmet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 5265

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2023

| Patent document cited in search report | | Publication date | Patent family member(s) | | | Publication date |
|---|---|---|---|---|---|---|
| CN 113525153 | A | 22-10-2021 | NONE | | | |
| EP 3725604 | A1 | 21-10-2020 | CN | 109552106 | A | 02-04-2019 |
| | | | EP | 3725604 | A1 | 21-10-2020 |
| | | | TW | 201933722 | A | 16-08-2019 |
| | | | WO | 2019114460 | A1 | 20-06-2019 |

EPO FORM P0459

For more details about this annex : see Official Journal of the European Patent Office, No. 12/82